# FASCICULE DE BREVET EUROPEEN

(11) **EP 1 042 248 B1**
(45) Date de publication et mention de la délivrance du brevet: **29.08.2007**
(21) Numéro de dépôt: 98962486.1
(22) Date de dépôt: 17.12.1998
(51) Int. Cl.: C03C 25/26

(54) **COMPOSITION D'ENSIMAGE POUR FILS DE VERRE, PROCEDE UTILISANT CETTE COMPOSITION ET PRODUITS RESULTANTS**
SCHLICHTZUSAMMENSETZUNG FÜR GLASFASERN, VERWENDUNGSVERFAHREN UND PRODUKTE DARAUS
GLASS FIBRE COATING COMPOSITION, METHOD USING SAID COMPOSITION AND RESULTING PRODUCT

(30) Priorité: 17.12.1997 FR 9715994
(43) Date de publication de la demande: 11.10.2000
(73) Titulaire: Saint-Gobain Vetrotex France S.A., 73000 Chambéry (FR)
(72) Inventeur: MOIREAU, Patrick, F-73190 Curienne (FR); ROUBIN, Marc, F-73000 Chambéry (FR)
(74) Mandataire: Muller, René
(86) Numéro de dépôt international: PCT/FR1998/002757
(87) Numéro de publication internationale: WO 1999/031025

(56) Documents cités:
- EP-A- 0 657 395
- EP-A- 0 657 396
- EP-A- 0 657 490
- "GLASS FIBER COATING COMPOSITION" RESEARCH DISCLOSURE, no. 367, 1 novembre 1994, page 606 XP000494363
- YAMAMURA SHIGEKAZU ET AL: "BINDER FOR GLASS FIBERS" CHEMICAL ABSTRACTS + INDEXES, vol. 110, no. 9, 1 mai 1989, page 319 XP000057270
- PATENT ABSTRACTS OF JAPAN vol. 018, no. 157 (C-1180), 16 mars 1994 & JP 05 330860 A (DAI ICHI KOGYO SEIYAKU CO LTD), 14 décembre 1993

## Description

Dans le domaine des fibres de renforcement et des composites, la présente invention concerne des fils de verre revêtus d'une nouvelle composition d'ensimage ainsi que la composition en question, le procédé de production des fils utilisant cette composition et les composites réalisés à partir des fils.

La fabrication de fils de verre de renforcement se fait de façon connue à partir de filets de verre fondu s'écoulant des orifices de filières. Ces filets sont étirés sous forme de filaments continus, puis ces filaments sont rassemblés en fils de base, lesquels sont ensuite collectés.

Avant leur rassemblement sous forme de fils, les filaments sont revêtus d'une composition d'ensimage par passage sur un organe ensimeur. Ce dépôt est nécessaire à l'obtention des fils et permet à ces fils d'être utilisés efficacement dans la réalisation de composites. L'ensimage a en effet les fonctions habituelles suivantes : il protège les fils de l'abrasion et évite ainsi leur casse pendant leur fabrication et éventuellement pendant leur utilisation; il permet de plus l'association des fils réalisés avec des matières organiques et/ou inorganiques à renforcer, en facilitant, notamment, le mouillage et/ou l'imprégnation des fils par ces matières. Dans la plupart des cas, l'ensimage favorise également l'adhésion entre le verre et la matière à renforcer et permet l'obtention de composites présentant des propriétés mécaniques améliorées.

L'ensimage peut également assurer l'intégrité des fils, c'est-à-dire la liaison des filaments entre eux au sein des fils. Cette intégrité est notamment recherchée dans les applications textiles où les fils sont soumis à de fortes contraintes mécaniques. En effet, si les filaments sont peu solidaires les uns des autres, ils se rompent plus facilement et viennent perturber le fonctionnement des machines textiles. Les fils non intègres sont, de plus, considérés comme difficiles à manipuler.

Les compositions d'ensimage sont choisies de façon à remplir les fonctions précédemment citées et de façon à résister au cisaillement induit par le passage des filaments aux vitesses d'étirage (plusieurs dizaines de mètres par seconde) et à mouiller la surface des filaments auxdites vitesses. En règle générale, elles sont également choisies de façon à ne pas subir de réactions chimiques provoquant une augmentation importante de viscosité à température ambiante (pendant leur stockage) et sous filière (une polymérisation de l'ensimage, par exemple, rendant le dépôt de celui-ci impossible).

La plupart des ensimages actuellement utilisés sont des ensimages aqueux simples à manipuler, mais devant être déposés en grandes quantités sur les filaments pour être efficaces. L'eau représente généralement 90 % en poids de ces ensimages (pour des raisons de viscosité notamment), ce qui oblige à sécher les fils avant leur utilisation comme renforts, l'eau pouvant nuire à la bonne adhérence entre les fils et les matières à renforcer. Ces séchages sont longs et coûteux, doivent être adaptés aux conditions de fabrication des fils et leur efficacité n'est pas toujours optimale. Ils peuvent également entraîner des risques de migration irrégulière et/ou sélective des composants de l'ensimage lorsqu'ils sont faits sur des enroulements et/ou des phénomènes de coloration ou de déformation des enroulements. Cette déformation s'observe également, en l'absence de séchage, sur les enroulements à bords droits (stratifils) de fils fins (c'est-à-dire présentant un " titre " ou " masse linéique " de 300-600 tex (g/km) ou moins) revêtus d'ensimages aqueux.

Certains brevets décrivent des compositions ne nécessitant pas d'opérations de séchage, telles que des compositions anhydres. Le nombre de ces compositions adaptées au revêtement des fils de verre reste cependant faible en comparaison du nombre de compositions aqueuses existantes et le choix au sein de ces compositions en fonction de l'application recherchée reste donc limité. En particulier, il n'existe pas à l'heure actuelle, parmi les compositions ne nécessitant pas d'opérations de séchage, de compositions permettant d'obtenir les fils recherchés dans des applications telles que la fabrication de grilles de renfort de façade, de tissus pour véhicules ou de corps creux par enroulement (c'est-à-dire par dépôt sur un moule en rotation de fils de renfort imprégnés de résine), ces fils devant présenter une aptitude à l'imprégnation bien plus élevée que celle des fils de renforcement les plus courants utilisés dans d'aùtres applications.

La présente invention a pour objet une nouvelle composition d'ensimage apte à revêtir des fils de verre de façon avantageuse et ne nécessitant pas de séchage des fils après dépôt, cette composition permettant d'obtenir des fils particulièrement aptes à être imprégnés par des matières à renforcer et présentant néanmoins une intégrité suffisante pour pouvoir être manipulés, cette composition permettant ainsi d'élargir le domaine des ensimages et d'ouvrir la voie à de nouveaux produits et à de nouvelles applications.

La présente invention a également pour objet de nouveaux fils de verre ensimés présentant les propriétés définies au paragraphe précédent, lesdits fils étant aptes à renforcer efficacement des matières organiques et/ou inorganiques pour la réalisation de composites et étant, notamment, particulièrement adaptés à la fabrication de grilles de renfort de façade, de corps creux par enroulement et de tissus pour véhicules.

La composition d'ensimage selon l'invention est constituée d'une solution dont la teneur en solvant est inférieure à 5 % en poids, cette solution comprenant au moins 60 % en poids de composants susceptibles de polymériser, ces composants polymérisables étant pour au moins 60 % en poids d'entre eux des composants de masse moléculaire inférieure à 750 et ces composants polymérisables comprenant au moins un mélange susceptible de polymériser :
- de composant(s) présentant au moins une fonction réactive acrylique et/ou au moins une fonction réactive méthacrylique,
- et de composant(s) présentant au moins une fonction réactive amine primaire et/ou au moins une fonction réactive amine secondaire,
au moins 20 % des composants polymérisables présentant au moins deux fonctions réactives choisies parmi les fonctions acrylique, méthacrylique, amine primaire et amine secondaire, ainsi que définie dans la revendication 10.

Par la suite, par " composant (méth)acrylique" et par " composant amine primaire et/ou secondaire" on entend, respectivement, " composant présentant au moins une fonction réactive acrylique et/ou au moins une fonction réactive méthacrylique " et " composant présentant au moins une fonction réactive amine primaire et/ou au moins une fonction réactive amine secondaire". De la même façon, par " fonction réactive " on entend une fonction susceptible d'intervenir dans la réaction de polymérisation du mélange et par " polymérisation " et " polymériser ", on entend respectivement " polymérisation et/ou réticulation ", " polymériser et/ou réticuler ", la polymérisation pouvant se faire à température ambiante ou thermiquement. Enfin, par " composition comprenant... " on entend selon l'invention " composition dont les constituants initiaux sont... ", ou encore " composition formée à partir de... ".

Dans la composition selon l'invention, le(s) solvant(s) éventuel(s) est (sont) essentiellement un (des) solvant(s) organique(s) nécessaire(s) à la mise en solution de certains composés polymérisables. La présence de solvants en quantité limitée ne requiert pas de traitements particuliers pour les éliminer ; dans la majeure partie des cas, les ensimages selon l'invention sont, de surcroît, totalement dénués de solvants, c'est-à-dire de composés jouant uniquement un rôle de solvant dans la solution.

Les composants polymérisables, ces composants étant indispensables à l'ensimage et participant à la structure de l'ensimage polymérisé, représentent entre 60 et 100 % en poids de la composition d'ensimage selon l'invention, principalement entre 70 et 99,5 % en poids de la composition et, dans la plupart des cas, entre 75 et 90 % en poids de la composition. L'ensemble de ces composants polymérisables est plus commodément appelé par la suite " système de base ".

De préférence, le système de base est en majorité constitué (c'est-à-dire à plus de 50 %, de préférence à au moins 75 % en poids et jusqu'à 100 % en poids dans la majorité des cas) de composant(s) (méth)acrylique et de composant(s) amine primaire et/ou secondaire, l'utilisation de ce mélange de composants permettant l'obtention, après polymérisation, de copolymères participant notablement à la structure de l'ensimage polymérisé, et conférant des propriétés particulières aux fils de verre ensimés réalisés.

En outre, le système de base comprend une majorité (plus de 50 %, de préférence au moins 70 % et jusqu'à 100 % en poids) de composant(s) de masse moléculaire inférieure à 750. Notamment, la plupart (plus de 50 %, de préférence au moins 70 % et jusqu'à 100 % en poids) des composant(s) (méth)acrylique et composant(s) amine primaire et/ou secondaire de la composition présentent généralement une masse moléculaire inférieure à 750. II convient de préciser à ce propos que les différents taux indiqués dans la définition de l'invention sont évalués indépendamment les uns des autres, un même composant pouvant remplir plusieurs des conditions indiquées dans la définition de l'invention et pouvant ainsi être pris en considération pour l'évaluation de plusieurs taux.

De préférence et en général selon l'invention, les composants de masse moléculaire inférieure à 750 précédemment mentionnés sont de masse moléculaire inférieure à 500. De même, dans la plupart des cas selon l'invention et de façon préférée, ces composants sont des monomères (mono ou polyfonctionnels comme explicité ultérieurement), mais le système de base peut également comprendre des composants de masse moléculaire inférieure à 750 sous forme d'oligomères ou de polymères à fonctions partiellement polymérisées.

Selon certains modes de réalisation, le système de base selon l'invention peut éventuellement comprendre une faible proportion de composant(s) participant à la structure de l'ensimage polymérisé mais ne présentant pas de fonction (méth)acrylique ou amine telle que définie précédemment (par exemple un ou des composants présentant au moins une fonction époxy) et/ou présentant une masse moléculaire plus élevée.

Selon le mode de réalisation préféré de l'invention permettant d'obtenir des résultats particulièrement satisfaisants, le système de base est uniquement constitué de composant(s) (méth)acrylique et de composant(s) amine et/ou, éventuellement, est constitué uniquement de composants de masse moléculaire inférieure à 750.

Les composants polymérisables de la composition selon l'invention peuvent présenter une ou plusieurs fonctions réactives. Par " composant polyfonctionnel (méth)acrylique ", on entend par la suite " composant présentant au moins deux fonctions réactives choisies parmi les fonctions acrylique et méthacrylique ". De même, par " composant polyfonctionnel amine primaire et/ou secondaire ", on entend par la suite " composant présentant au moins deux fonctions réactives choisies parmi les fonctions amine primaire et amine secondaire " et par " composant polyfonctionnel (méth)acrylique et/ou amine primaire et/ou secondaire", on entend par la suite " composant présentant au moins deux fonctions réactives choisies parmi les fonctions acrylique, méthacrylique, amine primaire et amine secondaire ". Selon l'invention, le système de base comprend au moins 20 % de composant(s) polyfonctionnel(s) (méth)acrylique et/ou amine primaire et/ou secondaire. De préférence, il comprend entre 30 et 100 % en poids, de façon particulièrement préférée entre 35 et 95 % en poids, de composant(s) polyfonctionnel(s) (méth)acrylique et/ou amine primaire et/ou secondaire, ce(s) composant(s) polyfonctionnel(s) étant préférentiellement choisi(s) parmi les composants suivants : composants présentant au moins deux fonctions réactives acrylique, composants présentant au moins deux fonctions réactives méthacrylique, composants présentant au moins deux fonctions réactives amine primaire, composants présentant au moins deux fonctions réactives amine secondaire, composants présentant au moins une fonction réactive acrylique et au moins une fonction réactive méthacrylique, composants présentant au moins une fonction réactive amine primaire et au moins une fonction réactive amine secondaire.

De façon particulièrement préférée, le système de base comprend au moins un composant polyfonctionnel (méth)acrylique. Dans des modes de réalisation avantageux de la présente invention, le taux de composant(s) polyfonctionnel(s) (méth)acrylique est d'au moins 20 % en poids du système de base.

De préférence également selon l'invention, le système de base de la composition comprend au moins un composant monofonctionnel acrylique ou méthacrylique ou amine primaire ou secondaire, c'est-à-dire un composant dont le nombre de fonctions choisies parmi les fonctions acrylique, méthacrylique, amine primaire et amine secondaire est égal à un.

A titre d'exemples non limitatifs, le(s) composant(s) (méth)acrylique de la composition peut (peuvent) être un (plusieurs) des composants suivants : alkyl (méth)acrylate à chaîne aliphatique C₄-C₂₀, cyclohexyl- ou 2(2-éthoxyéthoxy) éthyl- ou 2-phénoxyéthyl- ou isobornyl- ou tétrahydrofurfuryl- ou glycidyl- etc. (méth)acrylate, (méth)acrylate de 2-hydroxyéthyl carbamate d'isopropyle; (méth)acrylate de 2-hydroxyéthyl oxazolidone; 1,4 butanediol- ou néopentylglycol- ou polyéthylèneglycol- ou polypropylèneglycol- ou 1,6 hexanediol- ou bisphénol (A ou F)- ou diéthylcarbonate- etc. di(méth)acrylate; triméthylolpropane- ou pentaérythrytol- ou glycérylpropoxy-; etc. tri(méth)acrylate; pentaérythrytol-tétra(méth)acrylate; etc.

En règle générale selon l'invention, la proportion de composant(s) (méth)acrylique dans la composition d'ensimage est comprise entre 25 et 80 %, de préférence entre 35 et 75 % en poids de ladite composition. Dans la plupart des cas, elle est comprise entre 40 et 70 % en poids de la composition d'ensimage. De préférence, le(s) composant(s) polyfonctionnel(s) (méth)acrylique représente(nt) au moins 25 % de ce(s) composant(s) (méth)acrylique. Comme composant(s) polyfonctionnel(s) (méth)acrylique, on utilise préférentiellement un (des) composant(s) présentant deux fonctions choisies parmi les fonctions acrylique et méthacrylique (composant(s) difonctionnel(s)) et/ou un (des) composant(s) présentant trois fonctions choisies parmi les fonctions acrylique et méthacrylique (composant(s) trifonctionnel(s)) et /ou éventuellement un (des) composant(s) présentant quatre fonctions choisies parmi les fonctions acrylique et méthacrylique (composant(s) tétrafonctionnel(s)). De préférence également, le système de base comprend au moins un composant monofonctionnel acrylique ou méthacrylique.

A titre d'exemples non limitatifs, le(s) composant(s) amine primaire et/ou secondaire de la composition peut (peuvent) être un ou plusieurs des composants suivants : isophorone diamine, menthane diamine, N-aminoéthylpipérazine, ou encore para ou méta-phénylène dianiline, oxydianiline, diéthyltoluène diamine, 4,4'-diamino diphényl méthane, amine secondaire à chaîne aliphatique C₄-C₂₀, diisopentylamine, N-éthyl méthallylamine, 1-(2-hydroxyéthyl)-2-imidazolidinone, 2,6-diméthylmorpholine, 2-propylimidazole, 2,6-diaminopyridine, polyamidoamine, dérivé de polyéthylènepolyamine, N'-(3-aminopropyl)-N-N'-diméthyl-1,3-propane-diamine, 2-butyl-2-éthyl-1,5-pentanediamine, héxa-méthylène diamine, m-xylène diamine, aminoalcool, amidoamine (bases de Mannich), etc.

En règle générale selon l'invention, la proportion de composant(s) amine primaire et/ou secondaire dans la composition d'ensimage est comprise entre 5 et 55 %, de préférence entre 10 et 45 % en poids de ladite composition. Dans la plupart des cas, elle est comprise entre 15 et 35 % en poids de la composition d'ensimage. Le système de base comprend au moins un composant polyfonctionnel amine primaire et/ou secondaire (préférentiellement au moins un composant difonctionnel c'est-à-dire présentant deux fonctions choisies parmi les fonctions amine primaire et amine secondaire) et/ou au moins un composant comprenant une fonction amine primaire. De préférence également, les fonctions amine des composants amine primaire et/ou secondaire sont rattachées à des chaînes aliphatiques ou cycloaliphatiques (c'est-à-dire ne font pas partie de cycles aromatiques).

Les composant(s) méthacrylique et composant(s) amine primaire et/ou secondaire et leurs taux sont choisis de façon à ce que le rapport r correspondant au nombre de sites réactifs (méth)acrylique divisé par le nombre de sites réactifs amine primaire et/ou secondaire en présence soit compris entre 0,2 et 3 (une fonction acrylique comptant pour un site réactif (méth)acrylique, une fonction méthacrylique comptant pour un site réactif (méth)acrylique, une fonction amine primaire comptant pour deux sites réactifs amine primaire et/ou secondaire et une fonction amine secondaire comptant pour un site réactif amine primaire et/ou secondaire) pour permettre une polymérisation suffisante de la composition d'ensimage. Dans la plupart des cas, ce rapport r est compris entre 0,3 et 2 et, de préférence, il est compris entre 0,4 et 1,8.

La composition d'ensimage comprend, en plus du système de base, au moins un catalyseur spécifique favorisant la polymérisation de l'ensimage. Ce catalyseur est choisi parmi les amines tertiaires, les dérivés d'amines tertiaires et les acides de Lewis (par exemple parmi les amines aliphatiques de BF₃, telles que le complexe trifluorure de bore/éthylamine, les acides de Lewis étant éventuellement associés à des donneurs d'hydrogène tels que le carbonate de propylène).

Le taux de composant(s) spécifique(s) précédemment défini(s) jouant uniquement le rôle de catalyseur(s) dans la composition d'ensimage est généralement inférieur à 8 % en poids de la composition, dans la plupart des cas inférieur à 6 % en poids et, de préférence, est inférieur ou égal à 4,5 % en poids de la composition d'ensimage.

Outre les composants participant essentiellement à la structure de l'ensimage polymérisé et éventuellement le(s) catalyseur(s) spécifique(s), la composition selon l'invention peut comprendre un ou plusieurs composants (désignés ci-après par additifs) donnant des propriétés particulières à la composition d'ensimage.

La composition selon l'invention peut comprendre au moins un agent de couplage permettant d'accrocher l'ensimage sur le verre, à titre de composant(s) du système de base pour le(s) agent(s) de couplage intervenant dans la réaction de polymérisation et/ou à titre seulement d'additif(s) pour le(s) agent(s) de couplage n'intervenant pas dans la réaction de polymérisation. La proportion d'agent(s) de couplage est de préférence comprise entre 0 et 30 % en poids de ladite composition d'ensimage et est dans la plupart des cas supérieure à 5 % en poids de la composition. De préférence, elle est comprise entre 8 et 25 % en poids de la composition d'ensimage. Le(s) agent(s) de couplage est (sont) généralement choisi(s) parmi les silanes tels que le gamma-glycidoxypropyl triméthoxysilane, le gamma-méthacryloxypropyl triméthoxysilane, le triméthoxysilane polyéthoxylé propoxylé, le gamma-acryloxypropyl triméthoxysilane, le vinyl triméthoxysilane, le phényl aminopropyl triméthoxysilane, le styrylaminoéthyl aminopropyl triméthoxysilane, le ter-butyl carbamoyl propyl triméthoxysilane, etc. 11(s) peut (peuvent) éventuellement être choisi(s) également parmi les titanates, les zirconates, les siloxannes, etc.

La composition selon l'invention peut également comprendre, généralement à titre d'additif n'intervenant pas dans la réaction de polymérisation, au moins un agent de mise en oeuvre textile jouant essentiellement un rôle de lubrifiant, dans des proportions comprises entre 0 et 25 % en poids et, de préférence, dans des proportions supérieures à 1 % (et préférentiellement inférieures à 20 %), et de façon particulièrement préférée dans des proportions supérieures à 5 % en poids. Le(s) agent(s) textile(s) peut (peuvent) être choisi(s) parmi les composants suivants : esters gras, dérivés des glycols (notamment de l'éthylène ou du propylène glycol), mélanges à base d'huiles minérales,... par exemple parmi les palmitates d'isopropyle ou de cétyle, les stéarates d'isobutyle, les laurates de décyle, les adipates d'éthylène glycol, les polyéthylène glycols ou les polypropylène glycols de poids moléculaire inférieur à 2000, les stéarates d'isopropyle, etc.

La composition selon l'invention peut également comprendre, généralement à titre d'additif n'intervenant pas dans la réaction de polymérisation, au moins un agent filmogène jouant uniquement un rôle d'agent de glissement et facilitant le fibrage, dans des proportions inférieures à 10 % en poids et, de préférence, inférieures ou égales à 5 % en poids. La présence de ce(s) agent(s) empêche un frottement important des filaments sur le dispositif ensimeur lorsque les filaments sont étirés à grande vitesse (plus de 40 m/s) et/ou lorsqu'ils sont très fins, ces agents étant cependant coûteux et pouvant entraîner une diminution des caractéristiques mécaniques des composites. Le(s) agent(s) de fibrage peut (peuvent) être choisi(s) parmi les composants suivants : silicones, siloxannes ou polysiloxannes tels que le glydicyl(n)polydiméthyl siloxanne, l'alpha-oméga acryloxypolydiméthyl siloxanne, etc., dérivés de silicones tels que des huiles de silicone, etc.

L'ensimage peut également comprendre, à titre d'additif, au moins un agent d'adaptation aux matières à renforcer, dans le cas des matières cimentaires notamment.

De façon générale, les fils de verre sont revêtus de la composition d'ensimage précédemment définie selon le procédé suivant : on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer au moins une partie de la composition d'ensimage précédemment définie à la surface des filaments en cours d'étirage, le(s) fil(s) étant revêtu(s) de la composition complète au plus tard lors de la collecte du (des) fil(s).

La composition d'ensimage selon l'invention peut être déposée en une ou plusieurs étapes. Dans le cas où cette composition polymérise sous l'effet d'un traitement thermique supérieur à 80°C, elle peut être déposée en une étape à la surface des filaments en cours d'étirage et avant rassemblement des filaments en fils. Dans le cas où cette composition polymérise à température ambiante, elle est préférentiellement déposée sur les filaments et/ou le(s) fil(s) sous la forme d'au moins deux compositions distinctes stables, ces compositions distinctes étant mélangées sur le(s) fil(s) ou au plus tôt juste avant leur dépôt conjoint et formant ainsi la composition d'ensimage.

La composition d'ensimage (si elle est par exemple déposée en une seule étape) ou les compositions devant former la composition d'ensimage (si elle est déposée en plusieurs étapes) présente(nt) avantageusement, au moment du dépôt sur les filaments, une viscosité inférieure ou égale à 0,4 Pa.s (400 cP) et, de préférence, inférieure ou égale à 0,2 Pa.s (200 cP), de façon à être compatible(s) avec les conditions d'obtention des fils de verre imposées par le procédé direct, la viscosité de la ou des compositions étant choisie en fonction de la vitesse d'étirage et du diamètre des filaments amenés à la (les) traverser. Ladite ou lesdites compositions présente(nt) également une vitesse de mouillage sur les filaments ou fil(s) compatible avec la vitesse d'étirage. Lorsque cette (ces) composition(s) est (sont) déposée(s) sur les filaments, elle(s) se répartit (répartissent) rapidement sur toute leur surface et forme(nt) un film de protection, notamment contre l'abrasion, pour chacun d'entre eux. Le(s) fil(s) obtenu(s) par rassemblement des filaments est (sont) ainsi constitué(s) de filaments gainés qui peuvent glisser les uns sur les autres. Ce(s) fil(s) est (sont) aisément manipulable(s) et, lorsqu'il(s) est (sont) bobiné(s) sous forme d'enroulements, peut (peuvent) facilement être extrait(s) des enroulements.

Dans le cas où la composition d'ensimage selon l'invention polymérise à température ambiante, on procède de préférence sur le modèle du procédé décrit dans la demande de brevet déposée en France le 14 mai 1997 sous le numéro 97/05926 (demande FR 2 763 328), c'est-à-dire de la façon suivante : on dépose une première composition stable, présentant une viscosité comprise entre 0,5.10-³ Pa.s (0,5 cP) et 0,25 Pa.s (250 cP), à la surface des filaments, on dépose au moins une seconde composition stable amenée séparément de la première et présentant une viscosité comprise entre 0,5.10⁻³ Pa.s (0,5 cP) et 0,3 Pa.s (300 cP) à la surface des filaments ou du(des) fil(s), au plus tôt lors du dépôt de la première composition et au plus tard lors de la collecte du ou des fils, l'écart de viscosité entre les compositions déposées étant inférieur à 0,15 Pa.s (150 cP), le mélange des compositions déposées formant la composition d'ensimage selon l'invention et étant apte à polymériser à température ambiante. Eventuellement, la réaction de polymérisation peut être accélérée par un traitement thermique ultérieur.

Par " composition stable " dans le procédé décrit au paragraphe précédent, on entend principalement " composition ne polymérisant pas sans l'apport d'au moins un autre composant ", cette composition pouvant dans de nombreux cas être conservée pendant plusieurs jours, à des températures de stockage pouvant aller jusqu'à 40 ou 50°C, et par " température ambiante ", on entend " sans apport d'énergie supplémentaire ", cette expression couvrant une plage de températures inférieures à 60°C, généralement de 15 à 45°C.

Par ailleurs, par " fils de verre " dans la présente invention, on entend des fils à base de verre, c'est-à-dire non seulement des fils formés uniquement de filaments de verre mais également des fils formés de filaments de verre et de filaments organiques, notamment de filaments thermoplastiques. Dans ce dernier cas, pendant l'étirage des filaments de verre, on extrude et on entraîne simultanément les filaments organiques (ou on amène simultanément les fils organiques issus par exemple d'enroulements), les trajets suivis par les filaments de verre et les filaments (ou fils) organiques convergeant l'un vers l'autre avant que lesdits filaments soient rassemblés en au moins un fil composite entraîné mécaniquement.

Les fils obtenus selon l'invention peuvent éventuellement présenter un revêtement non polymérisé jusqu'à leur utilisation dans la fabrication de composites ou peuvent présenter un revêtement polymérisé partiellement ou entièrement. Dans le cas où la composition d'ensimage revêtant les fils polymérise thermiquement, on soumet généralement ces fils à un traitement thermique, ce traitement s'opérant à plus ou moins longue échéance après le dépôt d'ensimage. Il est également possible d'effectuer un traitement thermique des fils ensimés dans le cas où la composition polymérise à température ambiante, si l'on souhaite par exemple accélérer la réaction de polymérisation de la composition. En général, le traitement thermique se fait indépendamment de l'opération de fibrage (des dispositifs n'étant ainsi pas nécessaires en-dessous de chaque filière), ce traitement pouvant être effectué à différents stades du procédé après fibrage.

Dans le cas où les fils obtenus sont collectés sous forme d'enroulements, le traitement thermique peut notamment se faire sur lesdits enroulements avant débobinage des fils. Il est souhaitable dans ce cas que les spires de fil(s) constituant lesdits enroulements présentent un angle de croisure au moins égal à 1,5° pour éviter des collages entre spires par l'intermédiaire de l'ensimage polymérisé, ces collages rendant le dévidage des fils difficile.

Les fils peuvent également être collectés sur des supports récepteurs en translation, auquel cas le traitement thermique éventuel peut se faire, le cas échéant, sur les fils répartis sur la surface de collecte. Par exemple, les fils peuvent être projetés par un organe servant également à les étirer, vers la surface de collecte se déplaçant transversalement à la direction des fils projetés en vue d'obtenir une nappe de fils continus entremêlés appelée " mat ". Le cas échéant, un liant (ce liant pouvant, éventuellement, comprendre et apporter à l'ensimage un (des) catalyseur(s) spécifique(s) tel(s) que mentionné(s) précédemment) peut avoir été projeté sur le mat et le traitement thermique éventuel peut permettre de polymériser à la fois le liant et l'ensimage.

Les fils peuvent également être coupés avant collecte par un organe servant également à les étirer, les fils coupés étant collectés sur des supports récepteurs en translation, auquel cas le traitement thermique éventuel peut se faire au niveau des fils coupés répartis sur les supports récepteurs.

Les fils ensimés peuvent également être collectés sans être soumis à un traitement thermique et être traités thermiquement ultérieurement. Notamment, les fils peuvent être collectés sous forme d'enroulements, puis être extraits desdits enroulements pour subir des traitements supplémentaires (par exemple pour être coupés par un organe servant également à les entraîner mécaniquement), le traitement thermique pouvant se faire sur les fils avant, pendant ou après le ou les traitements supplémentaires.

En dernier lieu, les fils ensimés peuvent être traités thermiquement après association avec une matière organique lors de la réalisation d'un composite, ladite matière comprenant éventuellement au moins un catalyseur spécifique tel que précédemment mentionné. Selon la matière organique utilisée, le traitement thermique peut s'accompagner d'un traitement par rayonnement ultraviolet, d'un traitement par faisceau d'électrons, etc.

Les fils de verre revêtus de l'ensimage selon l'invention présentent une perte au feu avantageusement inférieure à 3 % en poids des fils ensimés et, de préférence, inférieure à 1,5 %. La faible quantité d'ensimage déposée sur le fil permet de réduire considérablement les problèmes de collage entre fils, notamment lorsqu'ils sont collectés sous forme d'enroulements, permet également une meilleure ouverture du fil lors de l'imprégnation par une matière à renforcer et est économiquement avantageuse.

La composition d'ensimage selon l'invention est particulièrement adaptée pour la production de fils continus collectés sous forme de stratifils (rovings), de gâteaux, de cops, de mats..., ou pour la production de fils coupés, ces différents fils étant composés de filaments de diamètre pouvant aller de 5 à environ 24 microns. La composition d'ensimage selon l'invention est notamment adaptée à la production de fils fins (de titre inférieur à 600 tex) collectés sous forme de stratifils et utilisés par exemple en tissage. Les fils obtenus selon l'invention peuvent également se présenter sous forme de tresses, de rubans, de mats ou de réseaux, tissés ou non... après un ou plusieurs traitements (assemblage, tissage, retordage...) des fils obtenus par rassemblement des filaments.

Comme recherché selon l'invention, la composition d'ensimage ne nécessite pas le recours à une opération de séchage et rend les fils particulièrement aptes à être imprégnés par les matières à renforcer (comme illustré ultérieurement dans les exemples), ces fils pouvant ainsi servir à fabriquer des produits de type grilles de renfort de façades, tissus pour véhicules ou corps creux par enroulement ou éventuellement d'autres types de produits. Les fils obtenus selon l'invention présentent également de bonnes propriétés de résistance à la traction.

Les fils obtenus selon l'invention peuvent être associés avantageusement à différentes matières à renforcer en vue de la réalisation de pièces composites présentant de bonnes propriétés mécaniques. La composition selon l'invention rend les fils particulièrement compatibles avec les matières à renforcer, notamment avec les matières organiques et en particulier les matières époxy ou polyester, mais également avec les matières minérales telles que les matières cimentaires.

Les composites selon l'invention sont avantageusement obtenus par association d'au moins des fils de verre selon l'invention et d'au moins une matière organique et/ou inorganique, le taux de verre au sein de ces composites étant généralement compris entre 30 et 70 % en poids.

D'autres avantages et caractéristiques de l'invention apparaîtront à la lumière des exemples suivants donnant, à titre illustratif mais non exhaustif, des compositions d'ensimage selon l'invention et des caractéristiques des fils revêtus de ces compositions ou des caractéristiques des composites comprenant lesdits fils.

### EXEMPLE 1

Des filaments de 14 microns de diamètre obtenus par étirage de filets de verre fondu sont revêtus d'une première composition stable A puis d'une seconde composition stable B avant d'être rassemblés en fils et d'être bobinés sous forme de stratifils présentant une masse de 9,1 kg (diamètre extérieur de l'enroulement de 230 mm), de façon à obtenir des fils revêtus d'un ensimage, formé par le mélange des deux compositions A et B, présentant la composition suivante exprimée en pourcentages pondéraux :

### Composants apportés par la composition A :

- néopentylglycol diacrylate dipropoxylé⁽¹⁾ (réactif) 20,0 %
- 2 (2-éthoxyéthoxy) éthylacrylate⁽²⁾ (réactif) 15,0 %
- agent de couplage gamma-méthacryloxypropyl triméthoxysilane⁽³⁾ (réactif) 15,0 %

### Composants apportés par la composition B :

- 2,4,6 tri-diméthylaminométhylphénol⁽⁴⁾ (catalyseur) 3,0 %
- polybutadiène à 2 fonctions amine libres et de poids moléculaire moyen de 1200⁽⁵⁾ (réactif) 10,0 %
- isophorone diamine (réactif) 12,0 %
- agent textile à base d'huiles minérales et de tensioactifs⁽⁶⁾ (additif) 15,0 %
- agent de couplage gamma-aminopropyltriéthoxysilane⁽⁷⁾ (réactif) 10,0 %

La composition A présente une viscosité (mesurée sur un appareil de type SOFRASER Mivi 4000 commercialisé par la société SOFRASER) de 7,8.10⁻³ Pa.s (7,8 cP) à 20°C et la composition B présente une viscosité de 82,4.10⁻³ Pa.s (82,4 cP) à 20°C.

La composition d'ensimage selon le présent exemple est dénuée de solvant et comprend 82 % de composants polymérisables, 87 % environ desdits composants polymérisables présentant une masse moléculaire inférieure à 750. De plus, environ 51 % des composants polymérisables présentent au moins deux fonctions réactives choisies parmi les fonctions acrylique, méthacrylique, amine primaire et amine secondaire. Le rapport r de cette composition est en outre de 0,64.

Les fils obtenus présentent un titre de 300 tex et une perte au feu de 0,65 %.

Les fils sont ensuite extraits des enroulements pour mesurer leur ténacité à la rupture en traction dans les conditions définies par la norme ISO 3341. La ténacité à la rupture en traction mesurée sur 8 à 10 éprouvettes est d'environ 41 g/tex (écart-type de 2 g/tex).

La résistance à l'abrasion des fils est également évaluée en pesant la quantité de bourre formée après passage des fils sur une série d'embarrages cylindriques en céramique. Pour différents fils revêtus de l'ensimage décrit dans le présent exemple, la quantité de bourre à l'issue du test est de l'ordre de 32 mg par kg de fil testé.

A titre de comparaison, des fils revêtus d'un ensimage aqueux à base d'une émulsion de résine époxy, de silanes et de tensioactifs, ces fils étant séchés selon des méthodes ordinaires, peuvent former 200 voire 500 mg de bourre par kg de fil.

Enfin, la rigidité ou raideur des fils est mesurée sur le modèle de la norme ISO 3375. La rigidité des fils, mesurée sur 5 éprouvettes est de 60 mm avant passage sur des rouleaux de tension (notamment ceux utilisés pour dévider les fils), et est de 60 mm après passage sur six rouleaux de tension. Les valeurs mesurées, et tout particulièrement la valeur mesurée après passage sur les rouleaux, permettent de préjuger de l'aptitude à l'imprégnation des fils et donc de leur aptitude à la fabrication d'articles tels que des grilles de renfort de façades, des tissus pour véhicules et des corps creux par enroulement. En général, un fil de verre ensimé présente une aptitude à l'imprégnation suffisante pour permettre son utilisation dans la fabrication des articles susmentionnés si la valeur mesurée après passage sur les rouleaux est inférieure à 100 mm. De plus, plus les valeurs de rigidité sont faibles (la valeur la plus basse pouvant être obtenue étant de l'ordre de 60 mm), meilleure est l'aptitude du fil à l'imprégnation et à la fabrication des articles susmentionnés. Des valeurs proches de 120-130 mm ou inférieures à 120 mm pour la rigidité mesurée avant passage sur les rouleaux et des valeurs proches de 60 mm pour la rigidité mesurée après passage sur les rouleaux sont en général des valeurs particulièrement satisfaisantes.

### EXEMPLE 2

Des filaments de 14 microns de diamètre obtenus par étirage de filets de verre fondu sont revêtus d'une première composition stable A puis d'une seconde composition stable B avant d'être rassemblés en fils et d'être bobinés sous forme de gâteaux présentant une masse de 9,4 kg (diamètre extérieur de 330 mm), de façon à obtenir des fils revêtus d'un ensimage, formé par le mélange des deux compositions A et B, présentant la composition suivante exprimée en pourcentages pondéraux :

### Composants apportés par la composition A :

- triméthylolpropane triacrylate triéthoxylé⁽⁸⁾ (réactif) 19,0 %
- néopentylglycol diacrylate dipropoxylé⁽¹⁾ (réactif) 25,0 %
- agent de couplage gamma-méthacryloxypropyl triméthoxysilane⁽³⁾ (réactif) 10,0 %

### Composants apportés par la composition B :

- 2,4,6 tri-diméthylaminométhylphénol⁽⁴⁾ (catalyseur) 4,0 %
- produit à base d'isophorone diamine⁽⁹⁾ (réactif) 19,0 %
- agent textile à base d'huiles minérales ⁽¹⁰⁾ (additif) 15,0 %
- agent de couplage N-(beta-aminoéthyl) gamma-aminopropyl triméthoxysilane⁽¹¹⁾ (réactif) 8,0 %

La composition d'ensimage selon le présent exemple est dénuée de solvant et comprend 81 % de composants polymérisables, ces composants polymérisables présentant tous une masse moléculaire inférieure à 750 ; de plus, plus de 70 % des composants polymérisables présentent au moins deux fonctions réactives choisies parmi les fonctions acrylique, méthacrylique, amine primaire et amine secondaire. Le rapport r de cette composition est en outre de 1,45.

Les fils obtenus présentent un titre de 136 tex et une perte au feu de 0,40 %. La ténacité à la rupture en traction des fils, mesurée comme dans l'exemple 1, est d'environ 51 g/tex (écart-type de 2 g/tex).

La résistance à l'abrasion des fils est également évaluée comme dans l'exemple 1. Pour les fils selon le présent exemple, la quantité de bourre à l'issue du test est inférieure à 1 mg par kg de fil testé.

Par ailleurs, la rigidité des fils, mesurée comme dans l'exemple 1, est de 90 mm avant passage sur les rouleaux et de 60 mm après passage sur les rouleaux.

### EXEMPLE 3 (comparatif)

Des filaments de 14 microns de diamètre obtenus par étirage de filets de verre fondu sont revêtus de l'ensimage de composition suivante exprimée en pourcentages pondéraux :
- 2 (2-éthoxyéthoxy) éthylacrylate⁽²⁾ (réactif) 20,0 %
- glycéryl triacrylate propoxylé⁽¹²⁾ (réactif) 30,0 %
- mélange de benzène 1,3 diméthanamine, de triméthylhexane diamine et de p-tertiobutyl phénol⁽¹³⁾ (réactif) 5,0 %
- N-2-aminoéthyl morpholine (réactif) 5,0 %
- agent de couplage silane isocyanate bloqué⁽¹⁴⁾ (additif) 15,0 %
- agent de couplage gamma-aminopropyltriéthoxysilane⁽⁷⁾ (réactif) 10,0 %
- agent textile à base d'huiles minérales⁽¹⁵⁾ (additif) 15,0 %

Les filaments sont ensuite rassemblés en fils, lesquels sont bobinés sous forme de gâteaux présentant une masse de 9,4 kg (diamètre extérieur de 330 mm), puis les stratifils sont chauffés à 110°C pendant 8 heures. Les fils obtenus présentent un titre de 136 tex et une perte au feu de 0,64 %.

La composition d'ensimage selon le présent exemple est dénuée de solvant et comprend 70 % de composants polymérisables, ces composants polymérisables présentant tous une masse moléculaire inférieure à 750 ; de plus, plus de 46 % des composants polymérisables présentent au moins deux fonctions réactives choisies parmi les fonctions acrylique, méthacrylique, amine primaire et amine secondaire. Le rapport r de cette composition est en outre de 1,61.

La ténacité à la rupture en traction des fils extraits des enroulements, mesurée comme dans l'exemple 1, est d'environ 53 g/tex.

Par ailleurs, la rigidité du fil mesurée comme dans l'exemple 1 est de 130 mm avant passage sur les rouleaux et de 70 mm après passage sur les rouleaux.

### EXEMPLE 4 (comparatif)

Des filaments de 14 microns de diamètre obtenus par étirage de filets de verre fondu sont revêtus de l'ensimage de composition suivante exprimée en pourcentages pondéraux :
- néopentylglycol diacrylate dipropoxylé⁽¹⁾ (réactif) 20,0 %
- hexanediol diacrylate⁽¹⁶⁾ (réactif) 20,0 %
- ester aliphatique alkoxylé diacrylate⁽¹⁷⁾ (réactif) 30,0 %
- isophorone diamine (réactif) 15,0 %
- agent de couplage gamma-aminopropyltriéthoxysilane⁽⁷⁾ (réactif) 5,0 %
- agent textile palmitate d'isopropyle (additif) 10,0 %

Les filaments sont ensuite rassemblés en fils, lesquels sont bobinés sous forme de gâteaux présentant une masse de 9,4 kg (diamètre extérieur de 330 mm), puis les stratifils sont chauffés à 140°C pendant 8 heures. Les fils obtenus présentent un titre de 136 tex et une perte au feu de 0,6 %.

La composition d'ensimage selon le présent exemple est dénuée de solvant et comprend 90 % de composants polymérisables, ces composants polymérisables présentant tous une masse moléculaire inférieure à 750 ; de plus, environ 94 % des composants polymérisables présentent au moins deux fonctions réactives choisies parmi les fonctions acrylique, méthacrylique, amine primaire et amine secondaire.

La ténacité à la rupture en traction des fils extraits des enroulements, mesurée comme dans l'exemple 1, est d'environ 55 g/tex.

Par ailleurs, la rigidité du fil mesurée comme dans l'exemple 1 est de 120 mm avant passage sur les rouleaux et de 65 mm après passage sur les rouleaux.

### EXEMPLE 5

Des filaments de 14 microns de diamètre obtenus par étirage de filets de verre fondu sont revêtus d'une première composition stable A puis d'une seconde composition stable B avant d'être rassemblés en fils et d'être bobinés sous forme de stratifils présentant une masse de 9,6 kg, de façon à obtenir des fils revêtus d'un ensimage, formé par le mélange des deux compositions A et B, présentant la composition suivante exprimée en pourcentages pondéraux :

### Composants apportés par la composition A :

- triméthylolpropane triacrylate triéthoxylé⁽⁸⁾ (réactif) 22,0 %
- hexanediol diacrylate⁽¹⁶⁾ (réactif) 30,0 %

### Composants apportés par la composition B :

- 2,4,6 tri-diméthylaminométhylphénol⁽⁴⁾ (catalyseur) 3,0 %
- agent de couplage N (beta-aminoéthyl) gamma-aminopropyl triméthoxysilane⁽¹¹⁾ (réactif) 12,0 %
- agent textile palmitate d'isopropyle (additif) 8,0 %
- 2-(2-aminoéthyl)aminoéthanol (réactif) 25,0 %

La composition A présente une viscosité de 21,5.10⁻³ Pa.s (21,5 cP) à 20°C et la composition B présente une viscosité de 45.10⁻³ Pa.s (45 cP) à 20 °C.

La composition d'ensimage selon le présent exemple est dénuée de solvant et comprend 89 % de composants polymérisables, ces composants polymérisables présentant tous une masse moléculaire inférieure à 750 ; de plus, 100 % des composants polymérisables présentent au moins deux fonctions réactives choisies parmi les fonctions acrylique, méthacrylique, amine primaire et amine secondaire. Le rapport r de cette composition est en outre de 0,48.

Les fils obtenus présentent un titre de 330 tex environ et une perte au feu de 0,72 %. La ténacité à la rupture en traction des fils, mesurée comme dans l'exemple 1, est d'environ 32 g/tex (écart-type de 2 g/tex).

La résistance à l'abrasion des fils est également évaluée comme dans l'exemple 1. Pour les fils selon le présent exemple, la quantité de bourre à l'issue du test est de l'ordre de 150 mg par kg de fil testé.

Par ailleurs, la rigidité du fil mesurée comme dans l'exemple 1 est de 107 mm avant passage sur les rouleaux, et est de 82 mm après passage sur les rouleaux.

### EXEMPLE 6

Des filaments de 14 microns de diamètre obtenus par étirage de filets de verre fondu sont revêtus d'une première composition stable A puis d'une seconde composition stable B avant d'être rassemblés en fils et d'être bobinés sous forme de stratifils présentant une masse de 9,8 kg, de façon à obtenir des fils revêtus d'un ensimage, formé par le mélange des deux compositions A et B, présentant la composition suivante exprimée en pourcentages pondéraux :

### Composants apportés par la composition A :

- triméthylolpropane triacrylate triéthoxylé⁽⁸⁾ (réactif) 28,0 %
- agent de couplage gamma-méthacryloxypropyl triméthoxysilane⁽³⁾ (réactif) 12,0 %
- alkyl C₁₂-C₁₄ mono glycidyléther⁽¹⁸⁾ (réactif) 10,0 %

### Composants apportés par la composition B :

- mélange de benzène 1,3 diméthanamine, de triméthylhexane diamine et de p-tertiobutyl phénol⁽¹³⁾ (réactif) 25,0 %
- agent de couplage N-(benzyl)aminoéthyl aminopropyl triméthoxysilane⁽¹⁹⁾ (réactif) 12,0 %
- 2,4,6 tri-diméthylaminométhylphénol⁽⁴⁾ (catalyseur) 3,0 %
- agent textile à base d'huiles minérales⁽¹⁵⁾ (additif) 10,0 %

La composition d'ensimage selon le présent exemple est dénuée de solvant et comprend 87 % de composants polymérisables, ces composants polymérisables présentant tous une masse moléculaire inférieure à 750 ; de plus, au moins 60 % des composants polymérisables présentent au moins deux fonctions réactives choisies parmi les fonctions acrylique, méthacrylique, amine primaire et amine secondaire. Le rapport r de cette composition est en outre de 1,1.

Les fils obtenus présentent un titre de 300 tex et une perte au feu de 0,47 %. La ténacité à la rupture en traction des fils, mesurée comme dans l'exemple 1, est d'environ 58 g/tex (écart-type de 2 g/tex).

La résistance à l'abrasion des fils est également évaluée comme dans l'exemple 1. Pour les fils selon le présent exemple, la quantité de bourre à l'issue du test est inférieure à 1 mg par kg de fil testé.

Par ailleurs, la rigidité du fil mesurée comme dans l'exemple 1 est de 135 mm avant passage sur les rouleaux, et est de 68 mm après passage sur les rouleaux.

### EXEMPLE COMPARATIF 1

Des filaments de 10 microns de diamètre obtenus par étirage de filets de verre fondu sont revêtus d'une première composition stable A puis d'une seconde composition stable B avant d'être rassemblés en fils et d'être bobinés sous forme de gâteaux présentant une masse de 12,5 kg, de façon à obtenir des fils revêtus d'un ensimage, formé par le mélange des deux compositions A et B, présentant la composition suivante exprimée en pourcentages pondéraux :

### Composants apportés par la composition A :

- triméthylolpropane triglycidyl éther⁽²⁰⁾ (réactif) 18,0 %
- butanediol diglycidyl éther⁽²¹⁾ (réactif) 12,0 %
- alkyl C₁₂-C₁₄ mono glycidyléther⁽¹⁸⁾ (réactif) 12,0 %
- agent de couplage gamma-glycidoxypropyl triméthoxysilane⁽²²⁾ (réactif) 18,0 %

### Composants apportés par la composition B :

- isophorone diamine (réactif) 6,0 %
- mélange de benzène 1,3 diméthanamine, de triméthylhexane diamine et de p-tertiobutyl phénol⁽¹³⁾ (réactif) 10,0 %
- 2,4,6 tri-diméthylaminométhylphénol⁽⁴⁾ (catalyseur) 2,0 %
- agent textile à base d'huiles minérales⁽¹⁵⁾ (additif) 12,0 %
- agent textile palmitate d'isopropyle (additif) 10,0 %

La composition A présente une viscosité de 16,2.10⁻³ Pa.s (16,2 cP) à 20°C et la composition B présente une viscosité de 27.10⁻³ Pa.s (27 cP) à 20°C.

La composition d'ensimage selon le présent exemple comprend uniquement comme composants polymérisables des composants présentant une ou plusieurs fonctions époxy et des composants amine primaire ou secondaire.

Les fils obtenus présentent un titre de l'ordre de 169 tex et une perte au feu de 0,81 %. La ténacité à la rupture en traction des fils, mesurée comme dans l'exemple 1, est d'environ 59,7 g/tex.

La résistance à l'abrasion des fils est également évaluée comme dans l'exemple 1. Pour les fils selon le présent exemple, la quantité de bourre à l'issue du test est de l'ordre de 8 mg par kg de fil testé.

Par ailleurs, la rigidité du fil mesurée comme dans l'exemple 1 est de 180 mm avant passage sur les rouleaux, et est de 145 mm après passage sur les rouleaux.

### EXEMPLE COMPARATIF 2

Des filaments de 14 microns de diamètre obtenus par étirage de filets de verre fondu sont revêtus d'une première composition stable A puis d'une seconde composition stable B avant d'être rassemblés en fils et d'être bobinés, de façon à obtenir des fils revêtus d'un ensimage, formé par le mélange des deux compositions A et B, présentant la composition suivante exprimée en pourcentages pondéraux :

### Composants apportés par la composition A :

- triméthylolpropane triglycidyl éther⁽²⁰⁾ (réactif) 12,5 %
- butanediol diglycidyl éther⁽²³⁾ (réactif) 18,0 %
- alkyl C12-C14 mono glycidyléther⁽¹⁸⁾ (réactif) 10,0 %
- bisphénol A diglycidyléther⁽²⁴⁾ (réactif) 10,0 %
- agent de couplage gamma-méthacryloxypropyl triméthoxysilane⁽³⁾ (réactif) 16,5 %

### Composants apportés par la composition B :

- agent de couplage N-(benzyl) aminoéthyl aminopropyl triméthoxysilane ⁽¹⁹⁾ (réactif) 4,0 %
- mélange de benzène 1,3 diméthanamine, de triméthylhexane diamine et de p-tertiobutyl phénol⁽¹³⁾ (réactif) 11,0%
- 2,4,6 tri-diméthylaminométhylphénol⁽⁴⁾ (catalyseur) 2,0 %
- agent textile à base d'huiles minérales⁽¹⁵⁾ (additif) 16,0 %

La composition A présente une viscosité de 17.10⁻³ Pa.s (17 cP) à 22°C et la composition B présente une viscosité de 32.10⁻³ Pa.s (32 cP) à 22°C.

La composition d'ensimage selon le présent exemple comprend moins de 12 % de composants polymérisables présentant au moins deux fonctions réactives choisies parmi les fonctions acrylique, méthacrylique, amine primaire et amine secondaire.

Les fils obtenus présentent un titre de l'ordre de 300 tex et une perte au feu de 0,61 %. La ténacité à la rupture en traction des fils, mesurée comme dans l'exemple 1, est d'environ 42 g/tex (écart-type de 0,8 g/tex).

La résistance à l'abrasion des fils est également évaluée comme dans l'exemple 1. Pour les fils selon le présent exemple, la quantité de bourre à l'issue du test est inférieure à 1 mg par kg de fil testé.

Par ailleurs, la rigidité du fil mesurée comme dans l'exemple 1 est de 160 mm avant passage sur les rouleaux, et est de 127 mm après passage sur les rouleaux.

On observe dans les exemples précédents que les fils revêtus d'ensimage selon l'invention sont aisément manipulables et présentent de bonnes propriétés de résistance à la traction.

Les fils obtenus selon l'invention présentent par ailleurs une faible perte au feu, une bonne résistance à l'abrasion et permettent de renforcer efficacement des matières organiques et/ou inorganiques.

Les faibles taux de bourre obtenus lors des tests de résistance à l'abrasion des fils et les bonnes propriétés de résistance à la traction de ces fils permettent également de dire que ces fils selon l'invention présentent une bonne intégrité. Les fils obtenus présentent en outre une aptitude à l'imprégnation particulièrement améliorée par rapport à d'autres compositions anhydres, telles que des compositions à base essentiellement de composants à fonction(s) époxy et de composants amine.

Les fils selon l'invention peuvent servir à diverses applications, par exemple à fabriquer des corps creux par enroulement, des tissus pour véhicules, des grilles de renfort de façade ou d'autres types de produits composites.

| | |
|---|---|
| (1) | Commercialisé sous la référence " SR 9003 " par la Société CRAY-VALLEY |
| (2) | Commercialisé sous la référence " SR 256 " par la Société CRAY-VALLEY |
| (3) | Commercialisé sous la référence " Silquest A 174 " par la Société OSi |
| (4) | Commercialisé sous la référence " Actiron NX3 " par la Société PROTEX |
| (5) | Commercialisé sous la référence " Poly BD diamine " par la Société ATOCHEM |
| (6) | Commercialisé sous la référence " Nopcostat FT 504 " par la Société HENKEL NOPCO |
| (7) | Commercialisé sous la référence " Silquest A 1100 " par la Société OSi |
| (8) | Commercialisé sous la référence " SR 454 " par la Société CRAY-VALLEY |
| (9) | Commercialisé sous la référence " Grilonit H 82044 " par la Société EMS CHEMIE |
| (10) | Commercialisé sous la référence " Lubronyl GF " par la Société RP BEVALOID |
| (11) | Commercialisé sous la référence " Silquest A 1120 " par la Société OSi |
| (12) | Commercialisé sous la référence " SR 9021 " par la Société CRAY-VALLEY |
| (13) | Commercialisé sous la référence " Ancamine 2089 M " par la Société AIR PRODUCTS |
| (14) | Commercialisé sous la référence " Silquest Y 11778 " par la Société OSi |
| (15) | Commercialisé sous la référence " Torfil LA 4 " par la Société LAMBERTI |
| (16) | Commercialisé sous la référence " HDDA " par la Société UCB |
| (17) | Commercialisé sous la référence " SR 9209 " par la Société CRAY-VALLEY |
| (18) | Commercialisé sous la référence " Araldite DY 0391 " par la Société CIBA-GEIGY |
| (19) | Commercialisé sous la référence " Silquest Y 11899 " par la Société OSi |
| (20) | Commercialisé sous la référence " Araldite DY 0396 " par la Société CIBA-GEIGY |
| (21) | Commercialisé sous la référence " Araldite DY 0397 " par la Société CIBA-CEIGY |
| (22) | Commercialisé sous la référence " Silquest A 187 " par la Société OSi |
| (23) | Commercialisé sous la référence " Heloxy 67 " par la Société SHELL |
| (24) | Commercialisé sous la référence " Araldite GY 285 " par la Société CIBA-GEICY |

## Revendications

1. Fil de verre revêtu d'une composition d'ensimage constituée d'une solution dont la teneur en solvant est inférieure à 5 % en poids, cette solution comprenant au moins 60 % en poids de composants susceptibles de polymériser, ces composants polymérisables étant pour au moins 60 % en poids d'entre eux des composants de masse moléculaire inférieure à 750 et ces composants polymérisables comprenant au moins un mélange susceptible de polymériser :
• de composant(s) présentant au moins une fonction réactive acrylique et/ou au moins une fonction réactive méthacrylique,
• et de composant(s) présentant au moins une fonction réactive amine primaire et/ou au moins une fonction réactive amine secondaire,
au moins 20 % des composants polymérisables présentant au moins deux fonctions réactives choisies parmi les, fonctions acrylique, méthacrylique, amine primaire et amine secondaire,
les composants polymérisables comprenant au moins un composant polyfonctionnel amine primaire et/ou secondaire, et
le rapport r entre le nombre de sites réactifs (méth)acrylique et le nombre de sites réactifs amine primaire et/ou secondaire en présence étant compris entre 0,2 et 3,
la composition d'ensimage comprenant en outre au moins un catalyseur choisi parmi les amines tertiaires, les dérivés d'amines tertiaires et les acides de Lewis.

2. Fil de verre selon la revendication 1, **caractérisé en ce que** plus de 50 % des composants polymérisables présentent au moins une fonction réactive choisie parmi les fonctions acrylique, méthacrylique, amine primaire et amine secondaire.

3. Fil de verre selon l'une des revendications 1 ou 2, **caractérisé en ce que** le mélange comprend au moins un composant présentant au moins deux fonctions réactives choisies parmi les fonctions acrylique et méthacrylique.

4. Fil de verre selon l'une des revendications 1 à 3, **caractérisé en ce que** la proportion de composant(s) présentant au moins une fonction réactive acrylique et/ou au moins une fonction réactive méthacrylique est comprise entre 25 et 80 % en poids de la composition d'ensimage.

5. Fil de verre selon l'une des revendications 1 à 4, **caractérisé en ce que** la proportion de composant(s) présentant au moins une fonction réactive amine primaire et/ou au moins une fonction réactive amine secondaire est comprise entre 5 et 55 % en poids de la composition d'ensimage.

6. Fil de verre selon l'une des revendications 1 à 5, **caractérisé en ce que** la composition d'ensimage comprend au moins un catalyseur dans des proportions inférieures à 8 % en poids.

7. Fil de verre selon l'une des revendications 1 à 6, **caractérisé en ce que** la composition comprend en outre au moins un agent de couplage dans des proportions comprises entre 0 et 30 % en poids.

8. Fil de verre selon l'une des revendications 1 à 7, **caractérisé en ce que** la composition comprend en outre au moins un agent textile dans des proportions comprises entre 0 et 25 % en poids.

9. Fil de verre selon l'une des revendications 1 à 8, **caractérisé en ce que** la composition comprend en outre au moins un agent filmogène dans des proportions inférieures à 10 % en poids.

10. Composition d'ensimage pour fil de verre constituée d'une solution dont la teneur en solvant est inférieure à 5 % en poids, cette solution comprenant au moins 60 % en poids de composants susceptibles de polymériser, ces composants polymérisables étant pour au moins 60 % en poids d'entre eux des composants de masse moléculaire inférieure à 750 et ces composants polymérisables comprenant au moins un mélange susceptible de polymériser :
• de composant(s) présentant au moins une fonction réactive acrylique et/ou au moins une fonction réactive méthacrylique,
• et de composant(s) présentant au moins une fonction réactive amine primaire et/ou au moins une fonction réactive amine secondaire,
au moins 20 % des composants polymérisables présentant au moins deux fonctions réactives choisies parmi les fonctions acrylique, méthacrylique, amine primaire et amine secondaire,
les composants polymérisables comprenant au moins un composant polyfonctionnel amine primaire et/ou secondaire, et
le rapport r entre le nombre de sites réactifs (méth)acrylique et le nombre de sites réactifs amine primaire et/ou secondaire en présence étant compris entre 0,2 et 3,
la composition d'ensimage comprenant en outre au moins un catalyseur choisi parmi les amines tertiaires, les dérivés d'amines tertiaires et les acides de Lewis.

11. Procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils au moins une partie de la composition d'ensimage selon la revendication 10, le(s) fil(s) étant revêtu(s) de la composition complète au plus tard lors de la collecte du (des) fil(s).

12. Procédé selon la revendication 11, **caractérisé en ce que** la composition d'ensimage est déposée en une étape à la surface des filaments en cours d'étirage et avant rassemblement des filaments en fils.

13. Procédé selon la revendication 11, **caractérisé en ce que** l'on dépose une première composition stable, présentant une viscosité comprise entre 0,5.10-³ Pa.s et 0,25. Pa.s, à la surface des filaments, on dépose au moins une seconde composition stable amenée séparément de la première et présentant une viscosité comprise entre 0,5.10⁻³ Pa.s et 0,3 Pa.s à la surface des filaments ou du(des) fil(s), au plus tôt lors du dépôt de la première composition et au plus tard lors de la collecte du ou des fils, l'écart de viscosité entre les compositions déposées étant inférieur à 0,15 Pa.s, le mélange des compositions déposées formant la composition d'ensimage selon la revendication 10 et étant apte à polymériser à température ambiante.

14. Composite comprenant au moins une matière organique et/ou inorganique et des fils de verre ensimés, **caractérisé en ce qu'**il comprend au moins en partie des fils de verre ensimés selon l'une des revendications 1 à 9.

## Claims

1. Glass yarn coated with a sizing composition consisting of a solution whose solvent content is less than 5% by weight, this solution comprising at least 60% by weight of polymerizable components, at least 60% by weight of these polymerizable components being components with a molecular mass of less than 750 and these polymerizable components comprising at least one mixture capable of polymerizing:
• of component(s) having at least one reactive acrylic function and/or at least one reactive methacrylic function, and
• of component(s) having at least one reactive primary amine function and/or at least one reactive secondary amine function,
at least 20% of the polymerizable components containing at least two reactive functions chosen from acrylic, methacrylic, primary amine and secondary amine functions,
the polymerizable components comprising at least one primary and/or secondary amine polyfunctional component, and
the ratio r between the number of (meth)acrylic reactive sites and the number of primary and/or secondary amine reactive sites in presence being between 0.2 and 3,
the sizing composition additionally comprising at least one catalyst chosen from tertiary amines, tertiary amine derivatives and Lewis acids.

2. Glass yarn according to Claim 1, **characterized in that** more than 50% of the polymerizable components contain at least one reactive function chosen from acrylic, methacrylic, primary amine and secondary amine functions.

3. Glass yarn according to either of Claims 1 and 2, **characterized in that** the mixture comprises at least one component containing at least two reactive functions chosen from acrylic and methacrylic functions.

4. Glass yarn according to one of Claims 1 to 3, **characterized in that** the proportion of component(s) containing at least one acrylic reactive function and/or at least one methacrylic reactive function is between 25 and 80% by weight of the sizing composition.

5. Glass yarn according to one of Claims 1 to 4, **characterized in that** the proportion of component(s) containing at least one primary amine reactive function and/or at least one secondary amine reactive function is between 5 and 55% by weight of the sizing composition.

6. Glass yarn according to one of Claims 1 to 5, **characterized in that** the sizing composition comprises at least one catalyst in proportions of less than 8% by weight.

7. Glass yarn according to one of Claims 1 to 6, **characterized in that** the composition also comprises at least one coupling agent in proportions of between 0 and 30% by weight.

8. Glass yarn according to one of Claims 1 to 7, **characterized in that** the composition also comprises at least one textile agent in proportions of between 0 and 25% by weight.

9. Glass yarn according to one of Claims 1 to 8, **characterized in that** the composition also comprises at least one film-forming agent in proportions of less than 10% by weight.

10. Sizing composition for a glass yarn, consisting of a solution whose solvent content is less than 5% by weight, this solution comprising at least 60% by weight of polymerizable components, at least 60% by weight of these polymerizable components being components with a molecular mass of less than 750 and these polymerizable components comprising at least one mixture capable of polymerizing:
• of component(s) having at least one reactive acrylic function and/or at least one reactive methacrylic function, and
• of component(s) having at least one reactive primary amine function and/or at least one reactive secondary amine function,
at least 20% of the polymerizable components containing at least two reactive functions chosen from acrylic, methacrylic, primary amine and secondary amine functions,
the polymerizable components comprising at least one primary and/or secondary amine polyfunctional component, and
the ratio r between the number of (meth)acrylic reactive sites and the number of primary and/or secondary amine reactive sites in presence being between 0.2 and 3,
the sizing composition additionally comprising at least one catalyst chosen from tertiary amines, tertiary amine derivatives and Lewis acids.

11. Process for producing sized glass yarns, in which a plurality of molten glass threads, flowing from a plurality of orifices arranged at the base of one or more dies, are drawn in the form of one or more sheets of continuous filaments, the filaments are then assembled into one or more yarns which are collected on a moving support, the said process consisting in depositing at least some of the sizing composition according to Claim 10 on the surface of the filaments during- drawing and before assembly of the filaments into yarns, the yarn(s) being coated with the complete composition at the very latest when the yarn(s) are being collected.

12. Process according to Claim 11, **characterized in that** the sizing composition is deposited in one step on the surface of the filaments during drawing and before assembly of the filaments into yarns.

13. Process according to Claim 11, **characterized in that** a first stable composition, with a viscosity of between 0.5 × 10⁻³ Pa.s and 0.25 Pa.s is deposited on the surface of the filaments, at least a second stable composition, introduced separately of the first and having a viscosity of between 0.5 × 10⁻³ Pa.s and 0.3 Pa.s, is deposited on the surface of the filaments of the yarn(s), at the very earliest during the deposition of the first composition and at the very latest when the yarn(s) are being collected, the difference in viscosity between the compositions deposited being less than 0.15 Pa.s, the mixture of compositions deposited forming the sizing composition according to Claim 10 and being capable of polymerizing at room temperature.

14. Composite comprising at least one organic and/or inorganic material and sized glass yarns, **characterized in that** it comprises, at least partly, glass yarns sized according to one of Claims 1 to 9.

## Patentansprüche

1. Glasfaden, der mit einer Schlichtezusammensetzung überzogen ist, die aus einer Lösung besteht, deren Lösungsmittelgehalt weniger als 5 Gew.-% beträgt, wobei diese Lösung mindestens 60 Gew.-% Komponenten enthält, die in der Lage sind, zu polymerisieren, von diesen polymerisierbaren Komponenten mindestens 60 Gew.-% Komponenten mit einem Molekulargewicht von unter 750 sind und diese polymerisierbaren Komponenten wenigstens ein Gemisch, das in der Lage ist, zu polymerisieren, aus:
• Komponente/n, die mindestens eine reaktive Acrylfunktion und/oder mindestens eine reaktive Methacrylfunktion aufweist/aufweisen, und
• Komponente/n, die mindestens eine reaktive primäre Aminfunktion und/oder mindestens eine reaktive sekundäre Aminfunktion aufweist/aufweisen,
umfassen, wobei wenigstens 20 % der polymerisierbaren Komponenten mindestens zwei reaktive Funktionen aufweisen, die aus Acryl-, Methacryl-, primären und sekundären Aminfunktionen ausgewählt sind, die polymerisierbaren Komponenten mindestens eine polyfunktionelle primäre und/oder sekundäre Aminkomponente umfassen, das Verhältnis r von Anzahl der vorhandenen reaktiven (Meth-)Acrylstellen zu Anzahl der reaktiven primären und/oder sekundären Aminstellen 0,2 bis 3 beträgt und die Schlichtezusammensetzung außerdem mindestens einen Initiator enthält, der aus tertiären Aminen, tertiären Aminderivaten und Lewis-Säuren ausgewählt ist.

2. Glasfaden nach Anspruch 1, **dadurch gekennzeichnet, dass** mehr als 50 % der polymerisierbaren Komponenten mindestens eine reaktive Funktion aufweisen, die aus einer Acryl-, Methacryl-, primären und sekundären Aminfunktion ausgewählt ist.

3. Glasfaden nach Anspruch 1 oder 2, **dadurch gekennzeichnet, dass** das Gemisch wenigstens eine Komponente umfasst, die mindestens zwei reaktive Funktionen aufweist, die aus Acryl- und Methacrylfunktionen ausgewählt sind.

4. Glasfaden nach einem der Ansprüche 1 bis 3, **dadurch gekennzeichnet, dass** der Anteil an Komponente/n, die mindestens, eine reaktive Acrylfunktion und/oder mindestens eine reaktive Methacrylfunktion aufweist/aufweisen, 25 bis 80 Gew.-% der Schlichtezusammensetzung beträgt.

5. Glasfaden nach einem der Ansprüche 1 bis 4, **dadurch gekennzeichnet, dass** der Anteil an Komponente/n, die mindestens eine reaktive primäre Aminfunktion und/oder mindestens eine reaktive sekundäre Aminfunktion aufweist/aufweisen, 5 bis 55 Gew.-% der Schlichtezusammensetzung beträgt.

6. Glasfaden nach einem der Ansprüche 1 bis 5, **dadurch gekennzeichnet, dass** die Schlichtezusammensetzung mindestens einen Initiator mit einem Anteil von weniger als 8 Gew.-% enthält.

7. Glasfaden nach einem der Ansprüche 1 bis 6, **dadurch gekennzeichnet, dass** die Zusammensetzung außerdem mindestens ein Haftmittel mit einem Anteil zwischen 0 und 30 Gew.-% enthält.

8. Glasfaden nach einem der Ansprüche 1 bis 7, **dadurch gekennzeichnet, dass** die Zusammensetzung weiterhin mindestens ein Textilhilfsmittel mit einem Anteil von zwischen 0 und 25 Gew.-% enthält.

9. Glasfaden nach einem der Ansprüche 1 bis 8, **dadurch gekennzeichnet, dass** die Zusammensetzung darüber hinaus mindestens ein filmbildendes Mittel mit einem Anteil von unter 10 Gew.-% enthält.

10. Schlichtezusammensetzung für einen Glasfaden, die aus einer Lösung besteht, deren Lösungsmittelgehalt weniger als 5 Gew.-% beträgt, wobei diese Lösung mindestens 60 Gew.-% Komponenten enthält, die in der Lage sind, zu polymerisieren, von diesen polymerisierbaren Komponenten mindestens 60 Gew.-% Komponenten mit einem Molekulargewicht von unter 750 sind und diese polymerisierbaren Komponenten wenigstens ein Gemisch, das in der Lage ist, zu polymerisieren, aus:
• Komponente/n, die mindestens eine reaktive Acrylfunktion und/oder mindestens eine reaktive Methacrylfunktion aufweist/aufweisen, und
• Komponente/n, die mindestens eine reaktive primäre Aminfunktion und/oder mindestens eine reaktive sekundäre Aminfunktion aufweist/aufweisen,
umfassen, wobei wenigstens 20 % der polymerisierbaren Komponenten mindestens zwei reaktive Funktionen aufweisen, die aus Acryl-, Methacryl-, primären und sekundären Aminfunktionen ausgewählt sind, die polymerisierbaren Komponenten mindestens eine polyfunktionelle primäre und/oder sekundäre Aminkomponente umfassen, das Verhältnis r von Anzahl der vorhandenen reaktiven (Meth-)Acrylstellen zu Anzahl der reaktiven primären und/oder sekundären Aminstellen 0,2 bis 3 beträgt und die Schlichtezusammensetzung außerdem mindestens einen Initiator enthält, der aus tertiären Aminen, tertiären Aminderivaten und Lewis-Säuren ausgewählt ist.

11. Verfahren zur Herstellung von mit Schlichte überzogenen Glasfäden, gemäß welchem eine Vielzahl von Glasstrahlen, die aus einer Vielzahl von im Boden einer oder mehrerer Spinndüsen angeordneten Öffnungen fließen, zur Form einer oder mehrerer Bahnen aus endlosen Filamenten gezogen wird und anschließend die Filamente zu einem oder mehreren Fäden vereinigt werden, der/die auf einem sich bewegenden Träger gesammelt wird/werden, wobei das Verfahren darin besteht, auf die Oberfläche der im Ziehen begriffenen Filamente vor deren Vereinigung zu einem oder mehreren Fäden wenigstens einen Teil der Schlichtezusammensetzung nach Anspruch 10 aufzubringen und der/die Faden/Fäden spätestens während des Sammelns des/der Fadens/Fäden mit der vollständigen Zusammensetzung überzogen wird/werden.

12. Verfahren nach Anspruch 11, **dadurch gekennzeichnet, dass** die Schlichtezusammensetzung in einer Stufe auf die Oberfläche der im Ziehen begriffenen Filamente vor deren Vereinigung zu Fäden aufgebracht wird.

13. Verfahren nach Anspruch 11, **dadurch gekennzeichnet, dass** eine erste stabile Zusammensetzung, die eine Viskosität von 0,5.10-³ bis 0,25 Pa.s besitzt, auf die Oberfläche der Filamente und mindestens eine zweite stabile Zusammensetzung, die eine Viskosität von 0,5.10⁻³ bis 0,3 Pa·s besitzt und getrennt von der ersten zugeführt wird, auf die Oberfläche der Filamente bzw. des/der Fadens/Fäden frühestens während des Aufbringens der ersten Zusammensetzung und spätestens während des Sammelns des/der Fadens/Fäden aufgebracht wird, wobei die Viskositätsdifferenz der aufgebrachten Zusammensetzungen weniger als 0,15 Pa.s beträgt und das Gemisch aus aufgebrachten Zusammensetzungen die Schlichtezusammensetzung nach Anspruch 10 bildet und in der Lage ist, bei Umgebungstemperatur zu polymerisieren.

14. Verbundwerkstoff, der mindestens einen organischen und/oder anorganischen Stoff und mit Schlichte überzogene Glasfäden umfasst, **dadurch gekennzeichnet, dass** er mit Schlichte überzogene Glasfäden nach einem der Ansprüche 1 bis 9 wenigstens teilweise enthält.
